# EUROPEAN PATENT APPLICATION

(11) **EP 1 531 608 A2**
(43) Date of publication of application: **18.05.2005**
(21) Application number: 04026268.5
(22) Date of filing: 05.11.2004
(51) Int. Cl.: H04M 15/00, H04L 12/14, G06F 17/30

(54) **Accounting method and communication device**

(30) Priority: 12.11.2003 JP 2003383109
(71) Applicant: NTT DoCoMo, Inc., Tokyo 100-6150 (JP)
(72) Inventor: Ito, Takashi Intellectual Property Dept., 2-chome Chiyoda-ku Tokyo 100-6150 (JP); Ando, Tomohiro Intellectual Property Dept., 2-chome Chiyoda-ku Tokyo 100-6150 (JP)
(74) Representative: HOFFMANN - EITLE

(57) **Abstract**

To provide a technique for classifying data communication into plural fields easily and precisely. On the basis of specific data received from fixed terminal (19), condition data providing server (18) generates condition data indicating the condition for classifying data communication into plural fields for each telephone number of mobile terminal (11) and sends the generated condition data to accounting server (13). When data communication is performed by mobile terminal (11), accounting server (13) uses attribute data indicating the attribute of data communication and condition data corresponding to a telephone number of mobile terminal (11) to generate field data indicating the field suitable to the data communication. On the basis of the generated field data, accounting server (13) sequentially calculates telecommunication fees on data communication for each field. Accounting server (13) sends payment server (17) payment request data requesting separate payment of telecommunication fees calculated for each field.

## Description

### TECHNICAL FIELD

The present invention relates to a technique for accounting; more specifically, to a technique for calculating telecommunication fees.

### RELATED ART

The prevalence of Intranet has caused a widespread use of a technique for sending and receiving various data such as an e-mail or Web page. Furthermore, as a result of the prevalence of mobile communication networks in recent years, a technique for using a mobile communication terminal such as a mobile telephone acting as the above described communication terminal has become widespread.

Incidentally, telecommunication fees for data communication over a mobile communication network are calculated for each communication terminal performing data communication. Data communication performed by a user of a communication terminal for private purposes may cross data communication intended for business performed by a company using the same communication terminal. In such a case, it is unfair for either one of a user or a company to pay all of the telecommunication fees calculated for a communication terminal.

The problem becomes more serious when a communication device for performing data communication is a mobile communication terminal, because a user can simply use the same mobile communication terminal at their home and their company without clearly defining the terminal as either for private use or for business. In particular, a large number of mobile communication networks calculate telecommunication fees at a metered rate; for this reason, any user either an individual or a company would generally be concerned about the cost of using a mobile communication terminal.

Under such circumstances, a technique has been proposed, in which an operation for specifying whether the data communication is for private purpose or for business purpose is performed and, for classifying telecommunication fees for each data communication into private purpose and business purpose ( refer to Japanese patent laid-open No. 11-88505, for example). Japanese patent laid-open No. 2002-261987 proposes a technique for sequentially recording log data such as the time of data communication and quantity of data communicated and providing the log data to a user.

The above conventional technique allows a user to classify data communication as private purpose or business purpose and accordingly calculate the telecommunication fees. However, the conventional technique of Japanese patent laid-open No. 11-88505 is complicated, because a user has to perform an operation for specifying whether the data communication is for private purpose or business purpose. The conventional technique of Japanese patent laid-open No. 2002-261987 is also complicated, because each time a user has to determine whether data communication is performed for private purpose or business purpose. Furthermore, in both of the conventional techniques, a user determines whether data communication is performed for private purpose or business purpose. The drawback of this technique is that a user may not precisely perform the classification, and thus, the acquired information may not always be assured.

In light of the above situation, an aim of the present invention is to provide a technique for classifying data communication into plurality of fields easily and accurately.

### SUMMARY OF THE INVENTION

To solve the stated problems, the present invention provides an accounting method comprising: a communication process, wherein one communication device included in a communication network performs data communication with other communication devices included in the communication network; a classifying process for classifying, on the basis of condition data indicating the correspondence relationship between attributes of data communication and fields of data communication, the data communication performed in the communication process into any one of a data communication field; and a calculating process for calculating, for each data communication field classified in the classifying process, the communication fees for the data communication.

Furthermore, the present invention provides a communication device comprising: communication means for performing data communication with other communication devices over a communication network; storage means for storing condition data indicating the correspondence relationship between attributes of data communication and fields of data communication; acquiring means for acquiring attribute data indicating the data communication attributes performed among plural communication devices in the communication network; classifying means for classifying, on the basis of the attribute data and the condition data, the data communication performed in the communication process into any one of a data communication field.

The communication means, in the communication device of the present invention may also be configured to send field data indicating the data communication field classified by the classifying means.

The communication device of the present invention may further comprise calculating means for calculating, on the basis of field data indicating the data communication field classified by the classifying means, communication fees for each field in data communication performed between communication devices.

The communication means, in the communication device of the present invention may also be configured to send to other communication devices fee data indicating the telecommunication fees.

The communication means, in the communication device of the present invention may also be configured to receive condition data from other communication devices; and the storage means stores condition data received by the communication means.

The communication means, in the communication device of the present invention may also be configured to receive from other communication devices, specific data indicating the correspondence relationship between data communication attributes and data communication field, both of which to be included in the condition data; the communication means further comprising generating means for generating condition data on the basis of the specific data; the storage means stores condition data generated by the generating means.

The communication means, in the communication device of the present invention may also be configured to send the condition data to other communication devices.

The communication means, in the communication device of the present invention may also be configured so that the storage means stores condition data in correspondence with each identifier for identifying a communication device in the communication network; the acquiring means acquires attribute data including any one of an identifier of the plural communication devices; and the classifying means classifies data communication performed among the plural communication devices into any one of a data communication field, on the basis of condition data stored in correspondence with an identifier included in the attribute data by the storage means.

The accounting method and a communication device of the present invention allow automatic classification of telecommunication fees for data communication performed by one communication device into plural fields. This would enable a user or a company of a mobile communication terminal, to share telecommunication fees which are calculated more accurately on the basis of the classification of a plurality of fields.

### BRIEF DESCRIPTION OF THE DRAWINGS

Fig. 1 is a diagram illustrating an overall configuration of the communication system including an accounting information generating system according to the embodiment of the present invention.
Fig. 2 is a diagram illustrating a configuration of the mobile terminal according to the embodiment of the present invention.
Fig. 3 is a diagram illustrating a configuration of the sever and the fixed terminal according to the embodiment of the present invention.
Fig. 4 is a diagram illustrating a functional configuration of the accounting server according to the embodiment of the present invention.
Fig. 5 is a diagram illustrating a configuration of the condition DB according to the embodiment of the present invention.
Fig. 6 is a diagram illustrating a configuration of the fees DB according to the embodiment of the present invention.
Fig. 7 is a diagram illustrating a functional configuration of the condition data providing server according to the embodiment of the present invention.
Fig. 8 is a diagram illustrating a configuration of the condition category DB according to the embodiment of the present invention.
Fig. 9 is a diagram illustrating a configuration of the user DB according to the embodiment of the present invention.
Fig. 10 is a diagram illustrating the form page according to the embodiment of the present invention.
Fig. 11 is a diagram illustrating the history page according to the embodiment of the present invention.
Fig. 12 is a diagram illustrating a functional configuration of the accounting server in the first modification of the present invention.
Fig. 13 is a diagram illustrating a functional configuration of the condition data providing server in the second modification of the present invention.
Fig. 14 is a diagram illustrating a functional configuration of the mobile terminal in the second modification of the present invention.
Fig. 15 is a diagram illustrating a functional configuration of the accounting server in the second modification of the present invention.
Fig. 16 is a diagram illustrating a functional configuration of the condition data providing server in the third modification of the present invention.
Fig. 17 is a diagram illustrating a functional configuration of the condition data providing server in the fourth modification of the present invention.
Fig. 18 is a diagram illustrating a functional configuration of the fixed terminal providing server in the fourth modification of the present invention.

### BEST MODE FOR CARRYING OUT THE INVENTION

### [ 1. Embodiment]

### [ 11. Overall configuration of the communication system]

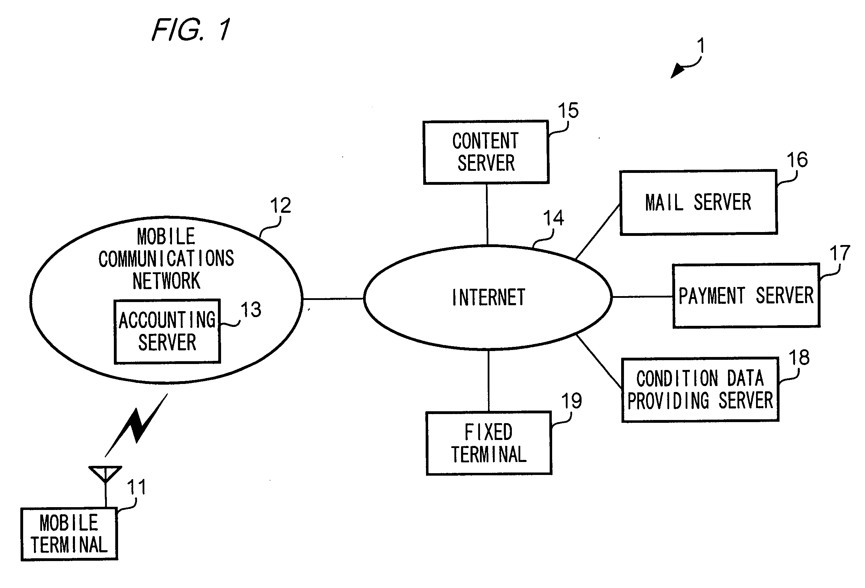

Fig. 1 is a diagram illustrating an overall configuration of a communication system 1 including an accounting information generating system of the embodiment of the present invention. Communication system 1 includes a mobile terminal 11, a mobile communication network 12, an accounting server 13, Internet 14, a content server 15, a mail server 16, a payment server 17, a condition data providing server 18, and a fixed terminal 19. Note that, in the present embodiment, accounting server 13 and condition data providing server 18 included in communication system 1 realize accounting information generating system of the present invention. Communication system 1 typically includes a plurality of mobile terminals 11, content servers 15, mail servers 16, and fixed terminals 19. For the sake of simplicity, the figure shows only one of each. Also, the number of accounting server 13, payment server 17, and condition data providing server 18 included in communication system 1 is not limited to one; the same type of server devices may be configured so as to process individually.

Mobile terminal 11 is a mobile telephone that is able to perform wireless voice communication with other mobile terminals 11 via such as a base station (not shown) included in mobile communication network 12 and relay switching center (not shown). Mobile communication network 12 is connected to a public telephone network (not shown) which enables mobile terminal 11 to perform voice communication 11 with a fixed telephone through mobile communication network 12 and a public telephone network.

Furthermore, mobile terminal 11 is able to send and receive data packets between other devices over mobile communication network 12. Specifically, mobile communication network 12 is connected to Internet 14 via Gateway Server (not shown); accordingly, mobile terminal 11 is able to send and receive various data such as Web pages over mobile communication network 12 and Internet 14 between content server 15 connected to Internet 14.

In the present embodiment, an example is given in which mobile terminal 11 acts as a mobile telephone; however, mobile terminal 11 may include other types of mobile communication devices such as PDA (Personal Digital Assistant). In another configuration, wired LAN (Local Area Network) may act as mobile communication network 12 and a terminal device performing data communication over a communication network by wired communication may act as mobile terminal 11. The type of data communication performed by mobile terminal 11 over mobile communication network 12 may not be limited to voice communication and packet communication; data communication may be designed for non-packet communication. Furthermore, mobile terminal 11 may be configured to perform such as voice communication only or packet communication only.

Accounting server 13 is included in mobile communication network 12 and is a server device for monitoring data communication performed by mobile terminal 11 over mobile communication network 12 and calculating telecommunication fees for each data communication. Note that accounting server 13 calculates telecommunication fees according to each of a plurality of fields for each mobile terminal 11; the fields include business purpose, prohibited data communication, and private purpose.

Content server 15 is a server device for sending various types of data such as a Web page in accordance with a request from other devices, or performing data processing in accordance with a request from other devices, and sending the result of data processing.

Mail server 16 is a server device for storing an e-mail sent from other devices in a mail box in accordance with a destination address included in the e-mail, and in response to the request from other devices, relaying the e-mail passing among devices by sending the e-mail stored in the mail box to other specified devices.

Payment server 17 is connected to an electronic settlement system managed by a banking institution such as a bank, and is a server device for receiving from accounting server 13 a payment request for requesting cash transfer between bank accounts through Internet 14; and on the basis of the received payment request data, the payment server instructs payment of telecommunication fees through the electronic settlement system of each banking institution.

Condition data providing server 18 is a server device for generating condition data indicating the condition for classifying data communication performed by each mobile terminal 11 into a plurality of fields and sending the generated condition data to other devices. Condition data providing server 18 receives from other devices communication-based log data indicating the history of each data communication in mobile communication network 12, stores the received communication-based log data, and sends the stored communication-based log data in response to a request from other devices.

Fixed terminal 19 is directly connected to Internet 14 or connected to Internet 14 by wire through Intranet such as LAN (not shown) and is a communication device for receiving various information providing services provided by content server 15 or condition data providing server 18 via Internet 14.

### [12. Configuration of Mobile Terminal ]

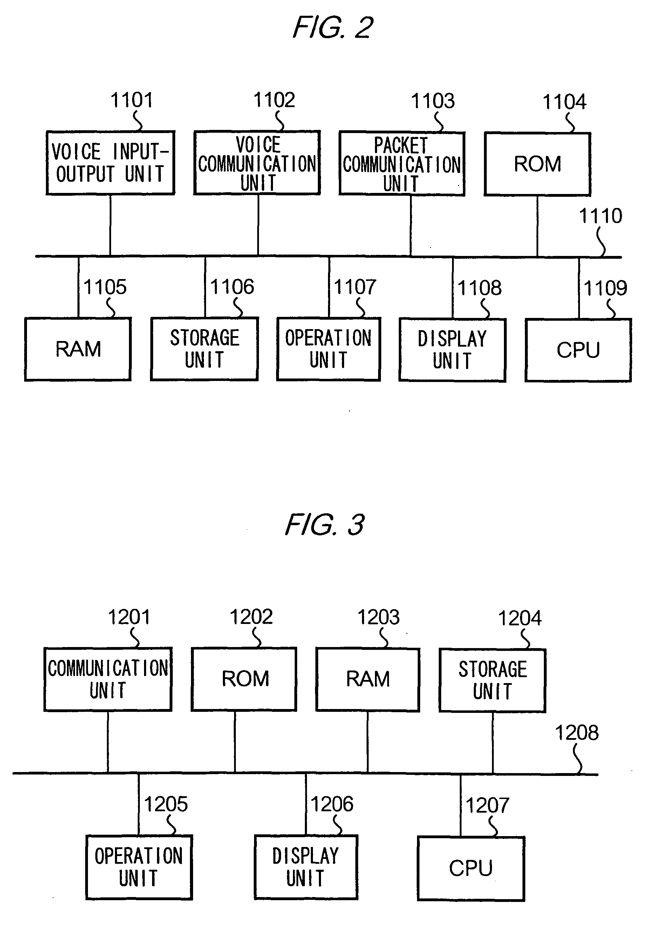

Fig. 2 is a diagram illustrating a configuration of mobile terminal 11. Mobile terminal 11 has a voice input-output unit 1101, a voice communication unit 1102, a packet communication unit 1103, a ROM ( Read Only Memory) 1104, a RAM ( Random Access Memory) 1105, a storage unit 1106, an operation unit 1107, a display unit 1108, a CPU (Central Processing Unit) 1109, and a bus 1110.

Voice input-output unit 1101 sends a voice of a user to CPU 1109 by converting it to digital voice data and outputs the digital voice data received from CPU 1109 by converting it back into voice. Voice communication unit 1102 outputs to mobile communication network 12 digital voice data received from CPU 1109 as an electric signal, and an electric signal containing the digital voice data sent from mobile communication network 12 is received by voice communication unit 1102 and sent to CPU 1109. Packet communication unit 1103 outputs to mobile communication network 12 data packets received from CPU 1109 as an electric signal, and an electric signal containing the data packets sent from mobile communication network 12 is received by packet communication unit 1101 and sent to CPU 1109.

ROM 1104 stores control programs for controlling mobile terminal 11 such as BIOS (Basic Input Output System). RAM 1105 is used as a work area of CPU 1109 for various processing operations. Storage unit 1106 is a non-volatile storage device for storing applications such as Web browser software for instructing the display of Web pages in mobile terminal 11 and various data managed by applications. Storage unit 1106 is also able to store applications or data downloaded from content server 15 via mobile communication network 12.

Operation unit 1107 is equipped with key pads to accept instructions for mobile terminal 11 from a user. Display unit 1108 has a liquid crystal display and displays image indicated by image data received from CPU 1109. CPU 1109 performs various data processing operations to control other components of mobile terminal 11. Each component included in mobile terminal 11 is mutually connected through bus 1110.

The configuration of mobile terminal 11 is not limited to the above described configuration; the configuration may include a processor detachable from mobile terminal 11 and a UIM (User Identify Module) which is a module having a non-volatile memory.

### [13. Configuration of Server and Fixed Terminal]

The basic configuration of accounting server 13, content server 15,. mail server 16, payment server 17, condition data providing server 18, and fixed terminal 19 (hereinafter, referred to as "servers") is the same as that of a typical computer. Fig. 3 is a diagram illustrating a configuration of the sever included in communication system 1.

Servers included in communication system 1 are equipped with a ROM 1202, a RAM 1203, a storage unit 1204, an operation unit 1205, a display unit 1206, a CPU 1207, and a bus 1208 respectively as components having the same function as that of ROM 1104, RAM 1105, storage unit 1106, operation unit 1107, display unit 1108, CPU 1109, and bus 1110 of mobile terminal 11, respectively.

Servers included in communication system 1 have a communication unit 1201. Communication unit 1201 outputs data packets received from CPU 1207 to an external communication network through wired connection, receives data packets from an external communication network through wired connection, and sends the received data packets to CPU 1207.

### [13. 1. Functional Configuration of Accounting Server]

In the present embodiment, accounting server 13 and condition data providing server 18 are the elements having the technical feature of the present invention. For this reason, the functional configuration of accounting server 13 and condition data providing server 18 will be described next.

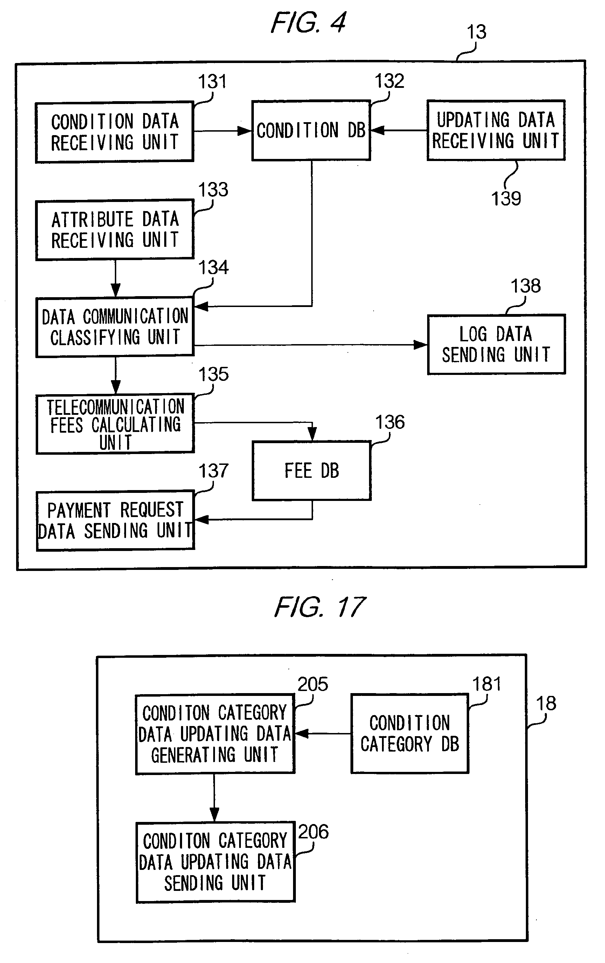

Fig. 4 is a diagram illustrating a functional configuration of accounting server 13. Accounting server 13 has a condition data receiving unit 131, a condition DB (Data Base) 132, an attribute data receiving unit 133, a data communication classifying unit 134, a telecommunication fees calculating unit 135, fee DB 136, a payment request data sending unit 137, a log data sending unit 138, and updating data receiving unit 139, as functional units.

As shown in Fig. 3, accounting server 13 has the same configuration as a typical computer; the accounting server realizes functional configuration shown in Fig. 4 by having CPU 1207 perform different control processing operations depending on the application stored in storage unit 1204. In the following explanation, the function of accounting server 13 is realized by having general computer to execute processes according to an application; however, the functional configurations shown in Fig. 4 may be realized by the dedicated hardware.

Condition data receiving unit 131 receives from condition data providing server 18 condition data indicating the condition for classifying data communication performed in mobile communication network 12 into any one of a plurality of categories.

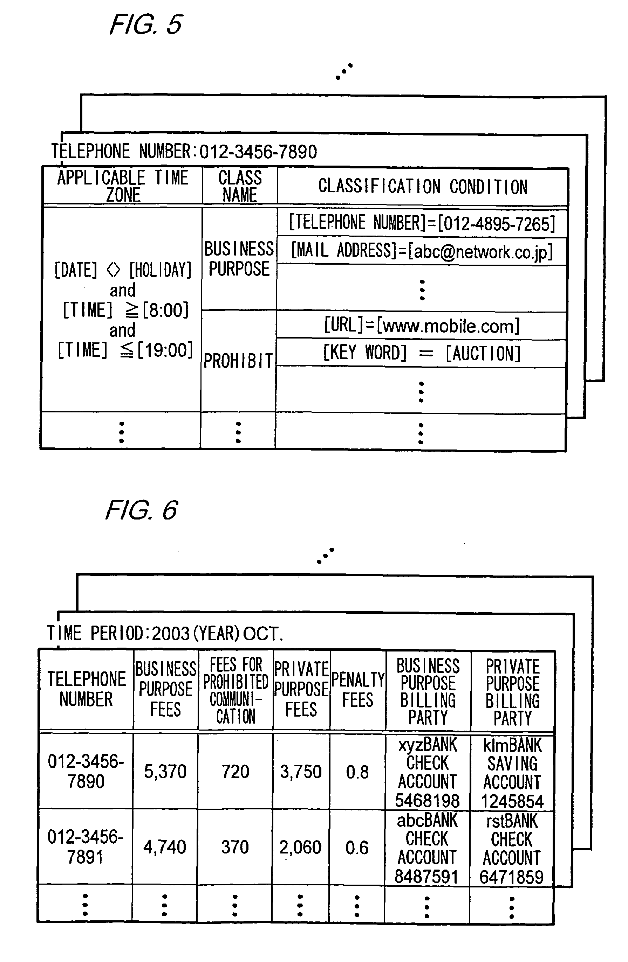

Condition DB 132 is a database for storing condition data received by condition data receiving unit 131. Fig. 5 is a diagram illustrating a configuration of condition DB 132. Each condition data comprises items of applicable time zone, class name, and classification condition.

Applicable time zone is data indicating the time to which condition shown in classification condition is applied. Specifically, [date] < > [holiday] and [time] > = [8:00] and [time] < = indicates that the contents corresponding to the classification condition are applied in the time period of 8:00~19:00, except on holidays.

In the present embodiment, two categories of data communication condition data are included in condition data; namely, communication for business purposes and communication to be prohibited. In the present embodiment, the communication that does not satisfy either of the classification conditions is considered as communication for private purposes. The categories of data communication are not limited to business purpose, prohibited data communication, and private purpose; also, the number of categories is not limited to three; for example, a class name may be classified into one of 1~5 phases according to the its degree of relevance to the business, or it may be classified by areas such as sales-related and development-related.

As shown in Fig. 5, in condition data, each class name corresponds with a plural classification condition. A classification condition corresponding with one class name is data indicating the attribute equipped with data communications of the class name. In Fig 5, for example, [telephone number]=[012-4895-7265] indicates that data communication between a communication equipment having the telephone number of 012-4895-7265 is classified into data communication of business purpose. Similarly, [mail address]=[abc@network.co.jp] indicates that the sending and receiving of an email whose destination address or sender address is abc@network.co.jp is data communication for business purpose. Furthermore, [URL]=[www.mobile.com] indicates that the receiving of a Web page stored in a location identified by a URL (Uniform Resource Locator) or the sending of data inputted to the Web page by a user of mobile terminal 11 is classified into prohibited data communication. In the present embodiment, [URL]=[www.mobile.com] for example, is supposed to include folders under the storage location identified by www.mobile.com. Also, [keyword]=[auction] indicates that the sending and receiving of data including text data referred to as [auction] is to be classified into prohibited data communication.

As described, in the present embodiment, plural classification conditions can be defined in correspondence with one class name; in the case that plural classification conditions are defined, data communication that satisfies at least one classification condition among plural conditions is supposed to be classified into a particular class name. However, the application method of a classification condition is not limited thereto. In the case that plural classification conditions are defined, data communication satisfying every classification condition may also be classified into a particular class name. Further, a classification condition may be represented by an attribute of data communication and a logical operator such as a logical addition and a logical multiplication. Suppose that A, B, and C are attributes of data communication, "and" is a logical multiplication, and "or" is a logical addition, A and B or C allows the representation of a classification condition having either attribute A and B or attribute C. Also, in the present embodiment, a classification condition is a condition relating to a telephone number, a URL, a mail address, or a keyword. In actuality however, the classification condition is not limited thereto. For example, any type of condition relating to an attribute of data communication such as data format included in data to be communicated, color information included in image data to be communicated, data size, frequency of communication performed between the same communication parties will be a classification condition.

Referring again to Fig. 4, the explanation with respect to functional units of accounting server 13 will be continued. Attribute data receiving unit 133 receives from a relay switching center included in mobile communication network 12, duplication of data packet sent and received by mobile terminal 11, call starting data indicating the start of voice communication performed by mobile terminal 11, and call completion data indicating the completion of voice communication performed by mobile terminal 11 as attribute data indicating the attribute of data communication.

On the basis of attribute data received by attribute data receiving unit and condition data included in condition DB 132, data communication classifying unit 134 classifies data communication performed by mobile terminal 11 into any one of class name including business purpose, prohibited data communication, and private purpose. The classifying unit then generates field data indicating the classified segment.

Telecommunication fees calculating unit 135 calculates telecommunication fees on data communication by mobile terminal 11 as communication-based fee data and updates the data corresponding to field data generated by data communication classifying unit 134 on the basis of the calculated communication-based fee data.

Fee DB 136 is a database for storing the distributed result of telecommunication fees on data communication by mobile terminal 11; the fees are distributed for each field of data communication. Fig. 6 is a diagram illustrating a configuration of fee DB 136. For at least one telephone number, fee DB 136 stores fee data corresponding to telephone number mobile terminal 11 on a predetermined time basis. In the present embodiment, for example, telecommunication fees are supposed to be paid month. Fig. 6 illustrates fee data related to data communication performed by mobile terminal 11 in November, 2003. Fee data has items of telephone number, business purpose fees, prohibited data communication fees, private purpose fees, penalty fees, as well as business purpose billing party and private purpose billing party.

Business purpose fees, prohibited data communication fees, and private purpose fees are data respectively indicating total telecommunication fees created as a result of performing data communication classified into business purpose, data communication classified into prohibited data communication, and data communication classified into private purpose during a specific time period; and the unit of fees may be "yen" or any other currency. Penalty fees are data indicating the rate of extra charge for telecommunication fees on data communication classified as prohibited. The penalty fees are charged for performing prohibited data communication; the rate of penalty fees will be given below. A business purpose billing party is data showing the bank account to which business purpose fees are charged. A private purpose billing party is data showing the bank account to which private purpose fees are charged.

Referring again to Fig. 4, the explanation with respect to functional units of accounting server 13 will be continued. Payment request data sending unit 137 sends payment server 17 payment request data requesting the payment of telecommunication fees on the basis of fee data included in fee DB 136 on the billing date of telecommunication fees.

Log data sending unit 138 sends condition data providing server 18 communication-based log data showing the history of data communication, when data communication is determined to be classified into prohibited data communication by data communication classifying unit 134.

The functional configuration of accounting server 13 includes optional configuration as the best embodiment of the present invention. Namely, in the functional configuration shown in Fig. 4, condition DB 132, attribute data receiving unit 133 and data communication classifying unit 134 are necessary to realize the technical feature of the present invention in the present embodiment, but the application of any one of the functional configurations is arbitrarily changeable.

### [13.2. Functional Configuration of Condition Data Providing Server]

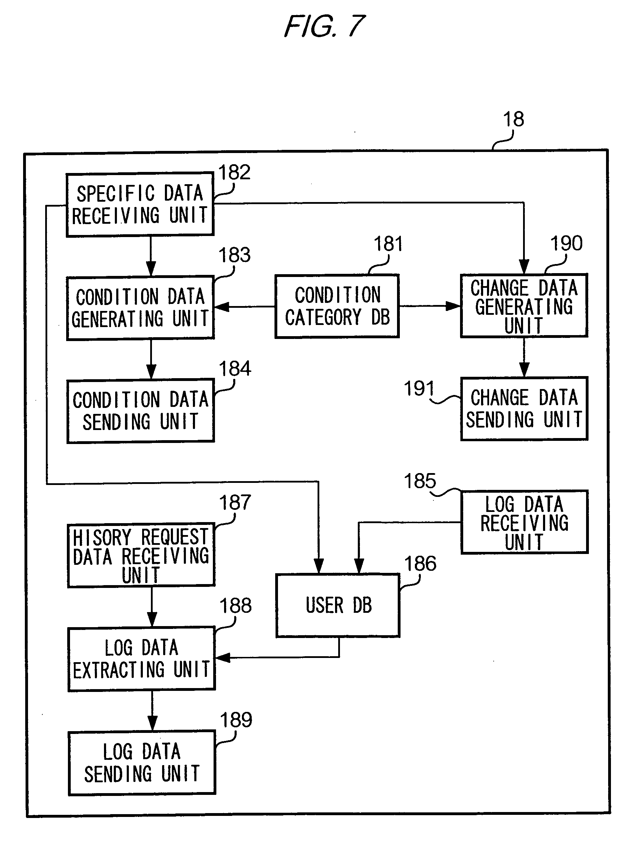

The functional configuration of condition data providing server 18 will be described next. Fig. 7 is a diagram illustrating a functional configuration of condition data providing server 18. Condition data providing server 18 comprises a condition category DB 181, a specific data receiving unit 182, a condition data generating unit 183, a condition data sending unit 184, a log data receiving unit 185, a user DB 186, a history request data receiving unit 187, a log data extracting unit 188, a log data sending unit 189, a change data generating unit 190 and change data sending unit 191 as functional units.

As is the same with accounting server 13, condition data providing server 18 has a configuration of a typical computer; wherein, the performing by CPU 1207 of different control process depending on the application stored in storage unit 1204 allows the providing server to realize the functional configuration shown in Fig. 7. In the following explanation, it is supposed that the performance of processes following an application by a general computer allows condition data providing server 18 to realize its function; in another configuration, dedicated hardware may also achieve functional configurations shown in Fig. 7.

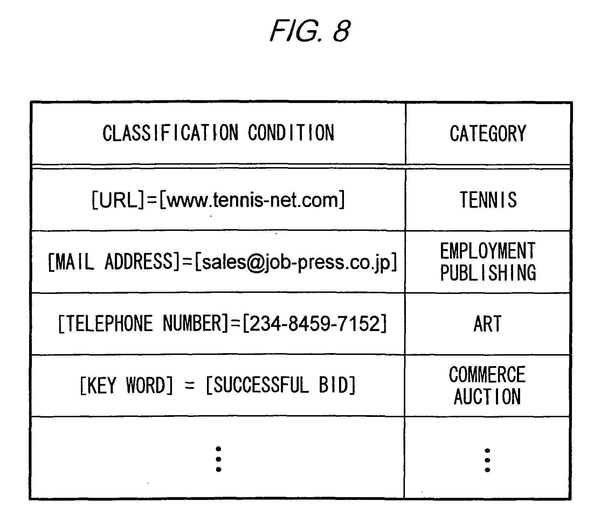

Condition category DB 181 stores condition category data indicating categories having strong relations with publicly known URLs, mail addresses and telephone numbers, or keywords frequently sent and received in Internet 14. Fig. 8 is a diagram illustrating a configuration of condition category DB 181. Condition category DB 181 includes a plural condition category data, and each condition category data has items of classification, condition, and category.

Classification condition is the same type of data as classification condition included in condition DB 132 (refer to Fig. 3) of accounting server 13. Condition category DB 181, exhaustively registered with publicly known URLs. A category is data indicating various categories such as "tennis" "employment" and "art". A single classification condition may correspond with a plurality of categories.

Referring again to Fig. 7, the explanation with respect to functional units of condition data providing sever 18 will be continued. Specific data receiving unit 182 receives from fixed terminal 19 specific data specifying conditions for generating condition data. For the classification of both business purpose and prohibited data communication, specific data includes data specifying the category of classification condition to be included in condition data and data specifying each time a classification condition to be included in condition data and classification condition to be excluded from condition data. Specific data received by specific data receiving unit 182 is stored in later described user DB 186.

Condition data generating unit 183 generates condition data on the basis of specific data included in specific data receiving unit 182; the data being received by using condition category data included in condition category DB 181. Condition data sending unit 184 sends to accounting server 13 condition data generated by condition data generating unit 183.

Log data receiving unit 185 receives communication-based log data from log data sending unit 138 of accounting server 13. Communication-based log data received by log data receiving unit 185 are sequentially stored in user DB 186.

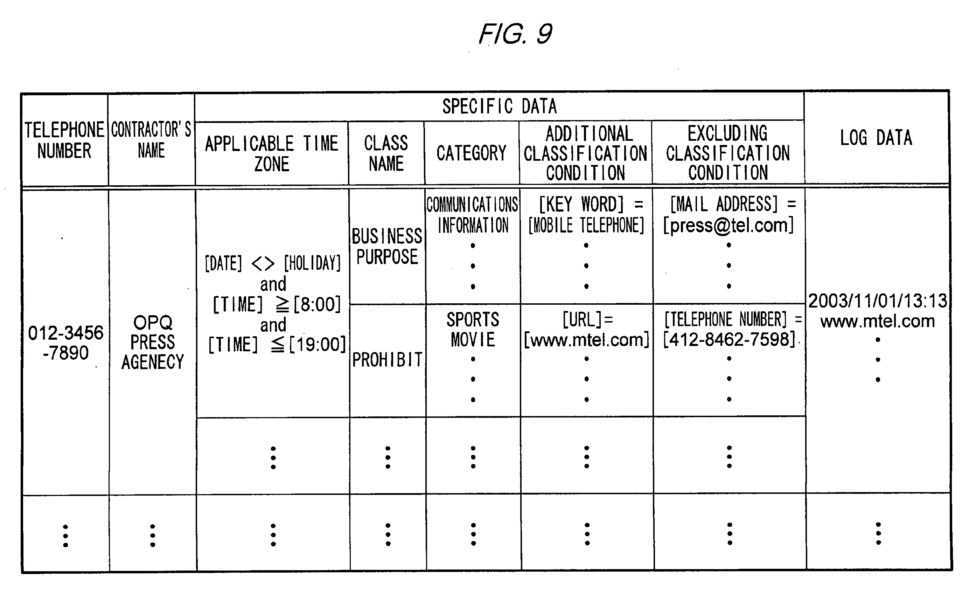

User DB 186 is a database for storing user data of each user identified by a telephone number of mobile terminal 1; the user data includes the name of a person who has contracted the utilization of mobile terminal 11 (hereinafter, referred to as "contractor"), specific data received by specific data receiving unit 182, and communication-based log data received from accounting server 13. Fig. 9 is a diagram illustrating a configuration of user DB 186. User data has items of telephone number, a contractor name, a specific data, and a log data. Telephone number designates the telephone number of mobile terminal 11; the telephone number also contains identification of the user of mobile terminal 11. Contractor name is data indicating the name of a contractor of mobile terminal 11.

Specific data included in a user data is data recording specific data sent by a contactor to condition data providing server 18 from fixed terminal 19. Specific data has sub-items of an applicable time zone, a class name, a category, an additional classification condition, and an excluding classification condition. Applicable time zone and class name are the same type of data as applicable time zone and class name included in condition DB 132 of accounting server 13 (refer to Fig. 5). In user data, as shown in Fig. 9, specific data may include plural applicable time zones for each applicable time zone, a pair of business purpose and prohibited data communication are corresponded as a class name.

A category included in a user data is the same type of data as the category included in condition category DB 181 (refer to Fig. 8); a category indicates classification condition which a contractor desires to include in condition data. An additional classification condition and an excluding classification condition are individually specified data such as a URL and a mail address that a user desires to include or exclude as classification condition in condition data. As shown in Fig. 9. in a typical user data, plural categories, plural additional classification conditions, and plural excluding classification conditions are corresponded in each category of business purpose and prohibited data communication.

A log data included in a user data is data sequentially recording communication-based log data indicating the history of data communication classified into prohibited data communication, the log data sent from log data sending unit 138 of accounting server 13. Communication-based log data includes information such as the date of data communication and a URL of a communication party.

Referring again to Fig: 7, the explanation with respect to functional units of condition data providing sever 18 will be continued. History request data receiving unit 187 receives from fixed terminal 19, for example, history request data requesting the sending of specific communication-based log data. Data indicating a telephone number and a time corresponding to communication-based log data to be sent are included in the history request data. Log data extracting unit 188 extracts log data corresponding to the telephone number and the term included in a history request data among communication-based log data stored in user DB 186. Log data sending unit 189 sends to fixed terminal 19 communication-based log data extracted by log data extracting unit 188.

In the case that the content of condition category DB 181 is changed or specific data receiving unit 182 receives a subsequent specific data from fixed terminal 19, updating data generating unit 190 generates updating data which is data for updating condition data already sent, on the basis of the changed part in condition category DB 181 or newly received specific data, to accounting server 13 by condition data sending unit 184. Updating data sending unit 191 sends to accounting server 13 updating data generated by updating data generating unit 190.

The functional configuration of the above described condition data providing server 18 includes optional configuration as the best embodiment of the present invention. Namely, the determination of which configuration to choose among the functional configurations shown in Fig. 7 can be arbitrary changeable.

### [ 14. Operations in Accounting Information Generating System]

The manner in which an accounting information generating system of the present invention operates in communication system 1 will be explained. In the following explanation, a case is presented wherein, a corporate body called company A distributes mobile terminal 11 to each of its employees so that telecommunication fees on data communication by mobile terminal 11 is fairly divided between company A and its employees by utilizing an accounting information generating system of the present embodiment.

Also, it is supposed that the communication carrier that is managing mobile communication network 12 is company Y and the company managing condition data providing server 18 is company X.

The accounting information generating system of the present embodiment is not limited to a case where a corporate body distributes mobile terminal 11 to its employees; the system is also applied to a case where an employee personally places a contract for using mobile terminal 11 with company Y and then shares the telecommunication fees on data communication by mobile terminal 11 with company A.

The person who is in charge of distribution in company A has already placed a contract with company Y regarding plural mobile terminals 11 and has distributed mobile terminals 11 to the employees of company A. The person distributing mobile terminals 11 also has information of the telephone number of each mobile terminal 11, the name of the employee to whom the terminals are distributed, the division, the bank account to which telecommunication fees are to be charged in the case that mobile terminal 11 is used for private purpose.

In the following explanation, for the sake of simplicity, an administrator is supposed to input information regarding the bank account of employees and the inputted information is accepted without being subjected to authentication; in actuality however, each employee individually registers with condition data providing server 18, information regarding their bank account so that, if necessary, an authentication is performed by a password. In another embodiment, instead of a bank account, data relating to other payment methods such as credit card number or information such as address may also be used. Furthermore, while carrying out data communication through mobile communication network 12 and Internet 14, a leakage or a falsification of the data communicated, and spoofing of a communication device is prevented by an encryption technique such as SSL (Secure Socket Layer) if necessary.

When using an accounting information generating system of the present invention, the administrator in company A is required to perform an operation of sending specific data to condition data providing server 18. In the following explanation, for example, the administrator sends specific data to condition data providing server 18 using Web browser executed in fixed terminal 19. The sending method of specific data is not limited to a method using fixed terminal 19; in a preferred embodiment, an administrator in company A may send such as specific data by his private mobile terminal 11. In another embodiment, instead of using Web browser, the person in company A may use an email address to send specific data to condition data providing server 18, or may use an e-mail to send the necessary information to the mobile telephone administrator in company X.

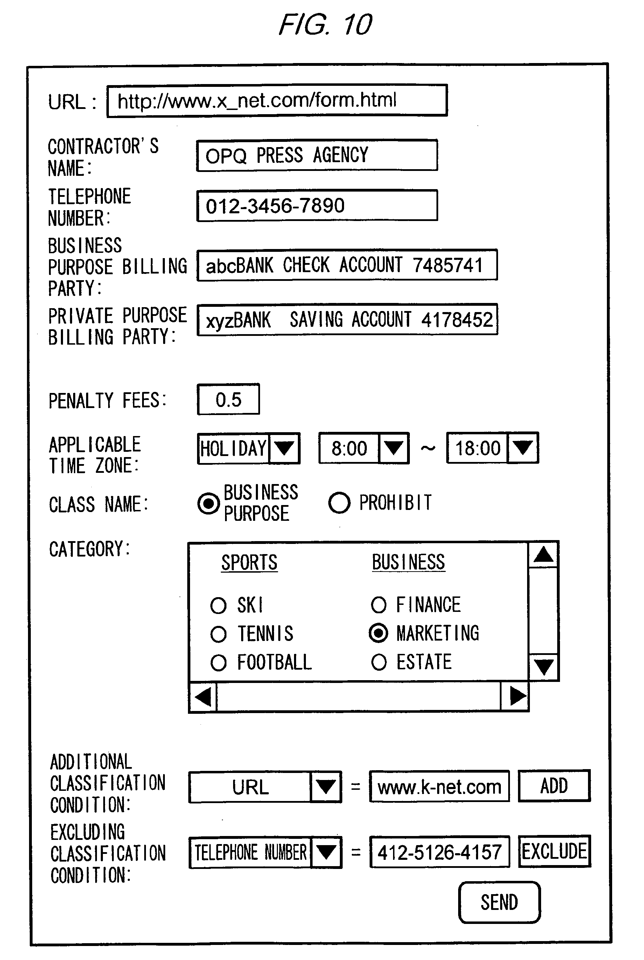

Fig 10 is a diagram illustrating a window where a Web page including a form for sending specific data (hereinafter, referred to as "form page") is displayed on display unit 1206 of fixed terminal 19. As shown in Fig. 10, input items such as a contractor's name and a telephone number are included in the form page. The data inputted in the items is called "identification data". A form page also includes input items of a business purpose billing party, a private purpose billing party, and the penalty rate. Hereinafter, data inputted in the items are referred to as "billing related data". A form page further includes an applicable time zone, a class name, a category, an additional classification condition, and an excluding classification condition. The input items correspond to specific data. For each distributed mobile terminal 11, the mobile telephone administrator repeats an operation of inputting necessary items in the input items for sending.

When the mobile telephone administrator performs a sending operation of data input in the form page, fixed terminal 19 sends to condition data providing server 18 identification data, billing-related data, and specific data. When receiving the data, condition data providing server 18 updates user DB 186 (refer to Fig.9) using the received identification data and specific data. Specifically, condition data providing server 18 adds to user DB 186 an updated user data including the received identification data and specific data. In such a case, the log data of the newly added log data is blank.

Then, condition data providing server 18 extracts from condition category DB 181 (refer to Fig. 8) condition category data including category corresponding to a combination of applicable time zone and class name included in the received specific data. The server then derives classification condition from the extracted condition category data. The derived plural classification condition will hereinafter be called "classification condition set". Condition data providing server 18 then adds additional classification condition included in received specific data to classification condition set. Condition data providing server 18 also excludes from the classification condition set a classification condition that aggress with excluding the classification condition included in the received specific data.

When generating a classification condition set for each combination of applicable time zone and class name included in the received specific data as described above, condition data providing server 18 sends the generated classification condition set to accounting server 13 as condition data. Along with the condition data, condition data providing server 18 sends to accounting server 13 a telephone number and billing-related data included in the previously received identification data.

When receiving a telephone number, billing-related data, and condition data, accounting server 13 updates user DB 186 (refer to Fig.6) using the received telephone number and the billing-related data. Specifically, accounting server 13 adds to the corresponding month of fee DB 136 an updated fee data including the received telephone number and the billing-related data. In such a case, the business purpose fees, prohibited data communication fees, and private purpose fees of the newly added fee data is blank.

When receiving a telephone number, a billing-related data, and condition data, accounting server 13 updates condition DB 132 (refer to Fig.5) using the received telephone number and the condition data. Namely, accounting server 13 adds the received condition data to condition DB 132 as a condition data corresponding to the received telephone number.

As described, when the update of fee DB 136 on the basis of billing-related data and condition DB 132 on the basis of condition data is completed, accounting server 13 is able to classify data communication performed by mobile terminal 11 into any one of the class name: business purpose; prohibited data communication; or private purpose.

When the employees of company A carry out voice communication with other communication equipment using mobile terminal 11, a relay switching center relaying the voice communication sends call starting data to accounting server 13 communication. Call starting data includes data indicating the starting time of voice communication, a telephone number of mobile terminal 11 that has started voice communication (hereinafter, referred to as "communication origin telephone number") and a telephone number of the party to which the voice communication is placed (hereinafter, referred to as "communication party telephone number"). In the following explanation, a telephone number is used as an identifier of mobile terminal 11 and an identifier of the communication party; in another embodiment, to prevent the leakage of information such as a telephone number, a temporary ID corresponding to the telephone number, instead of the actual telephone number may also be used.

When receiving call starting data, accounting server 13 retrieves condition data corresponding to communication origin telephone number included in call starting data from condition DB 132 (refer to Fig. 5) and selects a classification condition that the data indicating the starting time included in call starting data having an applicable time zone among the classification condition included in the retrieved condition data. The accounting server then retrieves from the selected classification condition a classification condition having a communication party telephone number included in call starting data. When retrieving a classification condition having a communication party telephone number from a classification condition corresponding to business purpose, accounting server 13 classifies voice communication corresponding to the received call starting data as data communication for business purpose. When retrieving a classification condition having a communication party telephone number from a classification condition corresponding to prohibited data communication, accounting server 13 classifies voice communication corresponding to the received call starting data as data communication of prohibited data communication. In the case that a classification condition including a communication party telephone number is not retrieved, accounting server 13, classifies voice communication corresponding to the received call starting data into data communication for private purpose. Accounting server 13 generates the classified result as field data.

When the employees of company A complete the voice communication using mobile terminal 11, relay switching center for example sends call completion data to accounting server 13. Call completion data includes data indicating the completion time of voice communication, a communication origin telephone number, and a communication party telephone number. When receiving call completion data, accounting server 13 determines from a communication origin telephone number and a communication party telephone number included in the received call completion data that the call completion data is data indicating the completion of voice communication represented by the previously received call starting data. Then, on the basis of data indicating the starting time included in call starting data and data indicating the completion time included in call completion data, accounting server 13 calculates the time required for the voice communication. Accounting server 13 then multiplies the calculated time required for voice communication by a predetermined time charge and generates communication-based fee data showing the communication fees for the data communication. Then, accounting,server 13 retrieves from fee DB 136 (refer to Fig. 6) fee data having a telephone number that matches a communication origin telephone number and adds communication fees indicating the generated communication-based fees to the value of items corresponding to the previously generated field data among the business purpose fees, prohibited data communication fees, and private purpose fees included in the retrieved fee data.

Further to the updating process of the above described fee DB 136, in the case of classifying voice communication into prohibited data communication, accounting server 13 sends communication-based log data of the voice communication to condition data providing server 18. More specifically, communication-based log data includes communication origin telephone number and communication party telephone number. When receiving communication-based log data, condition data providing server 18 retrieves from user DB 186 (refer to Fig. 9) user data in which a communication origin telephone number included in the communication-based log data matches with the telephone number and adds the communication party telephone number included in the received communication-based log data, along with current time, to an item in log data of the retrieved used data.

In another preferred embodiment, in the case that the employees of company A use mobile terminal 11 to send and receive data packet to and from content server 15, a relay switching center, relaying the data packet in mobile communication network 12 for example, sends accounting server 13 the duplication of the data packet. The data packet and its duplication sent and received in mobile communication network 12 includes identification information of the sender and receiver of the data packet; namely, a telephone number of mobile terminal 11 (hereinafter, referred to as "communication origin telephone number"), an URL identifying the communication party of mobile terminal 11, and a receiver mail address or a sender mail address (hereinafter, referred to as "communication party address"). Each data packet has a serial number indicating the located number of a sequence of data packet and a flag indicating whether the packet is the last packet.

In the following explanation, a URL or a mail address is used as an identifier for identifying the communication party of packet communication by mobile terminal 11; in a preferred embodiment, an IP address corresponding one-to-one to a URL or a mail address may also be used as a URL or mail address.

When receiving duplication of data packets indicating the first packet of a sequence of data packets, accounting server 13 retrieves condition data corresponding to communication origin telephone number included in call starting data from condition DB 132 (refer to Fig. 5) and selects a classification condition having an applicable time zone corresponding to the current time, among the classification condition included in the retrieved condition data. The accounting server then retrieves from the selected classification condition a classification condition having a communication party address included in call starting data. When retrieving a classification condition having a communication party address from a classification condition corresponding to business purpose, accounting server 13 classifies voice communication corresponding to the received call starting data as data communication for business purpose. When retrieving a classification condition having a communication party address from a classification condition corresponding to prohibited data communication, accounting server 13 classifies voice communication corresponding to the received call starting data as data communication of prohibited data communication. In the case that a classification condition including a communication party address is not retrieved, accounting server 13, classifies voice communication corresponding to the received call starting data into data communication for private purpose. Accounting server 13generates the classified result as field data.

Accounting server 13 then determines, from the communication origin telephone number and a communication party address included in the duplication of data packet sent from a relay switching center, whether the duplication is a subsequent packet to the duplication of previously received data packet so as to count the number of data packets in a series of packets. When receiving a data packet including a flag which indicates the lastly received packet, accounting server 13 then multiplies the number of counted data packets by a predetermined cost per packet and generates communication-based fee data showing the communication fees on the data communication. Then, accounting server 13 retrieves from fee DB 136 (refer to Fig. 6) fee data having a telephone number that matches a communication origin telephone number and adds communication fees indicating the generated communication-based fees to the value of items corresponding to the previously generated field data among the business purpose fees, prohibited data packet fees, and private purpose fees included in the retrieved fee data.

In the case that packet communication performed by mobile terminal 11 is classified into prohibited data communication in the classification process of data communication on the basis of the classification condition relating to the above described keyword, accounting server 13 sends communication-based log data of the voice communication to condition data providing server 18. More specifically, communication-based log data includes communication origin telephone number and communication party address. When receiving communication-based log data, condition data providing server 18 retrieves from user DB 186 (refer to Fig. 9) user data in which a communication origin telephone number included in the communication-based log data matches with the telephone number and adds the communication party address included in the received communication-based log data, along with current time, to an item in log data of the retrieved used data.

In the case that accounting server 13 is not able to retrieve classification condition including the received communication party address in the classification condition retrieval, the server temporarily stores the duplication of sets of data packet sent from relay switching center in a sequential order in RAM 1203. When receiving the duplication of data packet including a flag which indicates the lastly received packet, accounting server 13 joins the contents of the series of data packets stored in RAM 1203 to recover the data sent and received from mobile terminal 11. In the case that a text data is included in the recovered data, accounting server 13 extracts a classification condition relating to a keyword from a classification condition included in condition data corresponding to a communication origin telephone number previously selected from condition DB 132; the classification condition also corresponding to an applicable time zone belonging to the current time. Accounting server 13 then determines whether the text data included in the recovered data includes the keyword included in the extracted classification condition.

In the case that the text data included in the recovered data is determined to have a keyword included in classification condition corresponding to business purpose, accounting server 13 classifies packet communication corresponding to the duplication of the received data packet into data communication for business purpose. In the case that the text data included in the recovered data is determined to have a keyword included in classification condition corresponding to prohibited data communication, accounting server 13 classifies packet communication corresponding to the duplication of the received data packet into prohibited data communication for business purpose. In the case that the text data included in the recovered data is determined to have any keywords included in a classification condition, accounting server 13 classifies packet communication corresponding to the duplication of the received data packet into prohibited data communication for private purpose. Accounting server 13 generates the classified result as field data.

When completing the classification process of data communication on the basis of classification condition relating to a keyword as described, accounting server 13 manipulates the number of a sequence of data packets by a predetermined cost per packet to generate communication-based fee data indicating the telecommunication fees on the packet communication. Then, accounting server 13 retrieves fee data including a telephone number that agrees to a communication origin telephone number from fee DB 136 and adds telecommunication fees indicated by the generated communication-based fee data to the value of item corresponding to the previously generated field data among the items of business purpose fee data communication prohibited fees, and private purpose fees included in the retrieved fee data.

In the case that packet communication performed by mobile terminal 11 is classified into prohibited data communication in the classification process of data communication on the basis of the classification condition relating to the above described keyword, accounting server 13 sends communication-based log data of the voice communication to condition data providing server 18. More specifically, communication-based log data includes communication origin telephone numbers and keywords used in the classification. When receiving communication-based log data, condition data providing server 18 retrieves from user DB 186 (refer to Fig. 9) user data in which a communication origin telephone number included in the communication-based log data matches with the telephone number and adds the keywords included in the received communication-based log data, along with current time, to an item in log data of the retrieved used data.

As described, each time an employee of company A performs data communication using mobile terminal 11, accounting server 13 classifies each data communication into any one class name of business purpose, prohibited data communication, and private purpose and then adds to the corresponding item of fee DB 136 telecommunication fees on data communication. When the predetermined billing date such as the beginning of a month comes, accounting server 13 calculates the amount billed of telecommunication fees for company A by a formula represented by ( amount billed)=( business purpose fees) - (prohibited data communication fees) x ( penalty rate ) for respective fee data stored in fee DB 136. Accounting server 13 sends to payment server 17 bank account information of business purpose billing party and bank account information of company Y as payment request data. In another embodiment, accounting server 13 calculates the amount billed of telecommunication fees for company A by a formula represented by ( amount billed) = ( business purpose fees) - (prohibited data communication fees) + (prohibited data communication fees) x ( penalty rate ) for respective fee data stored in fee DB 136.

When receiving payment request data, payment server 17 instructs an electronic settlement system of a bank to transfer from a bank account of company A or employees to the bank account of company Y the distributed telecommunication fees in response to the received payment request data.

It is to be noted that, as a result of calculating the amount billed for company A and each employee by the illustrated formula, an employee pays an extra charge as a penalty for telecommunication fees on data communication, in the case that the employee performs a prohibited data communication; in this way, the extra charge acting as a deterrent can limit prohibited data communication. The formula for calculating the amount billed is not limited to the above formula; various formulae can be used. For example, in the case that company A does not desire to set penalty, an amount bill may be calculated by a formula that does not use penalty rate. In another configuration, instead of suppressing undesirable data communication by changing the amount billed, data communication may be prohibited as soon as data communication classified into prohibited data communication begins.

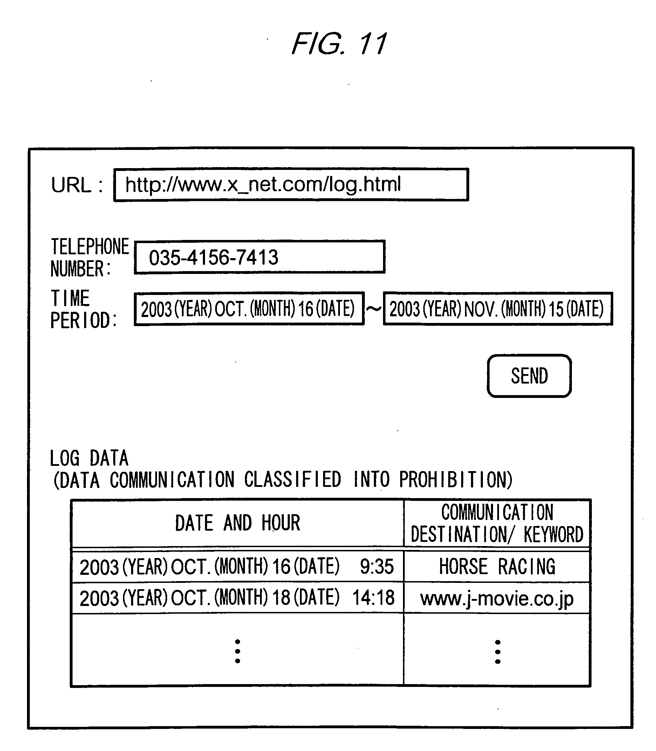

The mobile telephone administrator or an employee in company A uses Web browser executed in fixed terminal 19 or mobile terminal 11 and browses log data stored in user DB 186 (refer to Fig. 9) of condition data providing server 18. Fig. 11 is a diagram illustrating a window in which an administrator or an employee inputs a predetermined URL to a Web browser to display a Web page including log data ( hereinafter, referred to as "history page") on display unit 1206 of fixed terminal 19 or display unit 1108 of mobile terminal 11. As shown in Fig. 11, history page includes a telephone number and a term as an input item. History page also has a list of communication-based log data.

The mobile telephone administrator or an employee performs the operation for inputting data indicating a telephone number of mobile terminal 11 and a term for browsing in a telephone number column and a term column and sending the input data. In response to the operation, fixed terminal 19 or mobile terminal 11 sends data indicating the input telephone number and term as history request data to condition data providing server 18. When receiving history request data, condition data providing server 18 retrieves user data having telephone number included in history request data from user DB 186 and extracts user data having data indicating the time within the term included in history request data from communication-based log data included in the retrieved user data. Condition data providing server 18 sends the extracted communication-based log data to fixed terminal 19 or mobile terminal 11. When receiving communication-based log data from condition data providing server 18, fixed terminal 19 or mobile terminal 11 displays the received communication-based log data as a list, as shown in Fig. 11. Note that, a method for the mobile telephone administrator or an employee to browse log data is not limited to the above described Web page method; in another embodiment, for example, log data may be sent from condition data providing server 18 to fixed terminal 19 or mobile terminal 11 by an email. The information of the same data may also be sent from company X to the mobile telephone administrator or an employee of company A by a general postal service.

A URL or a mail address is created daily. A new keyword may be used in public in a specific category. Therefore, for precise classification of data communication by mobile terminal 11, the contents in condition data stored in condition DB 132 of accounting server 13 (refer to Fig. 5) is required to be updated frequently. For this reason, company X collects each day a URL or a mail address of a Web page generally exposed and investigates a keyword frequency exchanged in a category via Internet 14. The manager of company X updates the contents of condition category DB 181 of condition data providing server 18 (refer to Fig. 8) on the basis of the collected information. In the case that the contents of condition category DB 181 are updated, for respective user data stored in user DB 186 (Fig. 9), condition data providing server 18 generates updating data for updating condition data on the basis of data included in specific data and updated condition category data. The updating data includes data indicating a classification condition to be added and a classification condition to be excluded from condition data stored in condition DB 132 of accounting server 13. Condition data providing server 18 sends the generated updating data to accounting server 13. When receiving updating data, accounting server 13 updates the contents of condition DB 132 on the basis of the received updating data.

The mobile telephone administrator of company A updates the contents of specific data included in user DB 186 by performing the operation of inputting classification condition to be added or excluded to the form page shown in Fig. 10 as a classification condition and an excluding classification condition and sending the conditions to condition data providing server 18. As in the case of contents of the condition category DB 181 being updated, in the case that the contents of specific data included in user DB 186 is updated, condition data providing server 18 generates updating data and sends the generated updating data to accounting server 13. When receiving updating data, accounting server 13 updates the contents of condition DB 132 on the basis of the received updating data.

The updating method of condition data stored in condition DB 132 is not limited to the above method; for example, accounting server 13 may regularly download updating data stored in a predetermined area of condition data providing server 18.

As explained, in the case that a user of a communication terminal device performs data communication for different purposes such as business purpose and private purpose, the accounting information generating system of the present invention enables fair allocation of responsibility for payment of telecommunication fees among a company and an employee; this is because, the data communication is classified into a suitable field without having a user to perform specific manipulation.

Also, the configuration of the accounting information generating system of the present invention, wherein condition data indicating the condition for classifying data communication into several fields is regularly updated, allows a precise classification of data communication; the classification is also realized in the case that information such as a URL for classifying data communication changes each day.

Also, the configuration of the accounting information generating system of the present invention, wherein telecommunication fees on data communication is automatically calculated for each field that the data communication is classified, allows a user to be free from the trouble of calculating and distributing telecommunication fees.

Also, the configuration of the accounting information generating system of the present invention, wherein condition data for classifying data communication is selected in accordance with an identifier (such as a telephone number) of communication terminal device, allows the classification of data communication on different conditions for each user.

### [2. Modifications]

The above embodiment does not limit the present invention and is one preferred embodiment for explaining the technical feature of the present invention; various modifications as illustrated below are applicable.

In the following modification, an overall configuration of communication system 1 shown in Fig. 1, a configuration of mobile terminal 11, and a configuration of server shown in Fig. 3, are the same as the above described embodiment. In the following description, an explanation of only a functional configuration and an operation of mobile terminal 11 and such as a server which is different from the above embodiment will be given. In the following modification, same reference numerals are denoted for the elements as described in the above embodiment. In the following explanation, a functional configuration for explaining an updating process of condition data and a sending process of log data to fixed terminal 19 is omitted; however, the following modification may also have the same functional configuration as described in the above embodiment.

### [2. 1. First Modification]

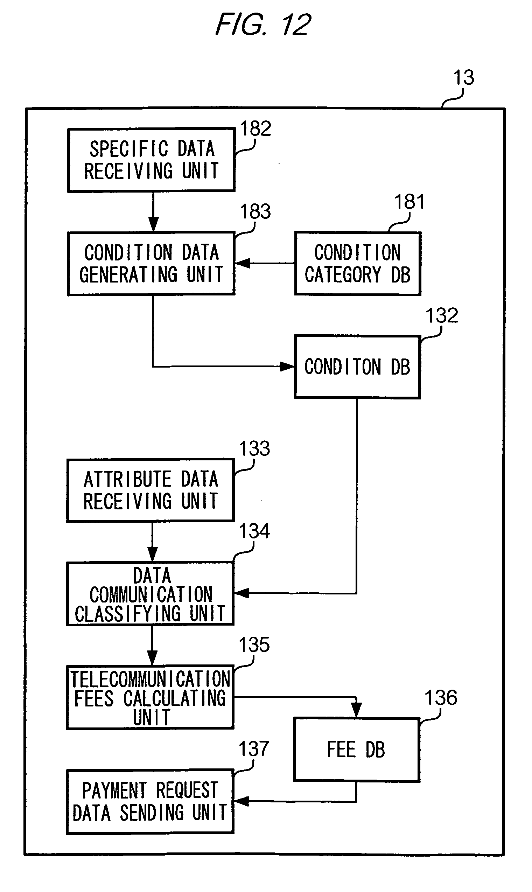

In the first modification, accounting server 13 of the above embodiment is provided with the function of condition data providing server 18. Fig. 12 is a diagram illustrating a functional configuration of accounting server 13 in the first modification.

In communication system 1 of the first modification, the mobile telephone administrator in company A operates fixed terminal 19 to send specific data to accounting server 13. When receiving specific data, specific data receiving unit 182 of accounting server 13 sends the received specific data to condition data generating unit 183. When receiving specific data, condition data generating unit 183 uses condition category data stored in condition category DB 181 to generate condition data for mobile terminal 11 identified by a telephone number included in specific data (hereinafter, referred to as "the telephone number"). Condition data generating unit 183 sends the generated condition data to condition DB 132. Condition DB 132 registers the received condition data as condition data of the telephone number.

When an employee of company A performs data communication using mobile terminal 11, attribute data receiving unit 133 of accounting server 13 receives from relay switching center of mobile communication network 12 duplication of data packet or call starting data and call completion data as attribute data of the data communication. When receiving attribute data, attribute data receiving unit 133 sends the received attribute data to data communication classifying unit 134. When receiving attribute data, data communication classifying unit 134, retrieves from condition DB 132 communication origin telephone number (namely, condition data corresponding to the telephone number) included in the received attribute data. On the basis of the retrieved condition data, the classifying unit classifies data communication corresponding to the received attribute data into its suitable field.

When completing the classification of data communication, data communication classifying unit 134 sends telecommunication fees calculating unit 135 field data indicating the field to which data communication is classified. When receiving field data, telecommunication fees calculating unit 135 calculates telecommunication fees in accordance with the number of packets sent and received in data communication and the communication duration of data communication. The telecommunication fees calculating unit sends fee DB 136 communication-based fee data indicating the calculated telecommunication fees, along with the received field data, to fee DB 136. When receiving communication-based fee data and field data, fee DB 136 adds the communication fees indicated by communication-based fee data to the value of fees corresponding to the field indicated by the field data, among business purpose fee data communication prohibited fees, and private purpose fees included in the fee data of the telephone number.

When the billing date comes, payment request data sending unit 137 calculates telecommunication fees to be billed for company A and each employee on the basis of fee data of respective telephone number in fee DB 136. Then, the payment request data sending unit sends payment server 17 payment request data requesting the withdrawal of calculated telecommunication fees.

### [2.2. Second Modification]

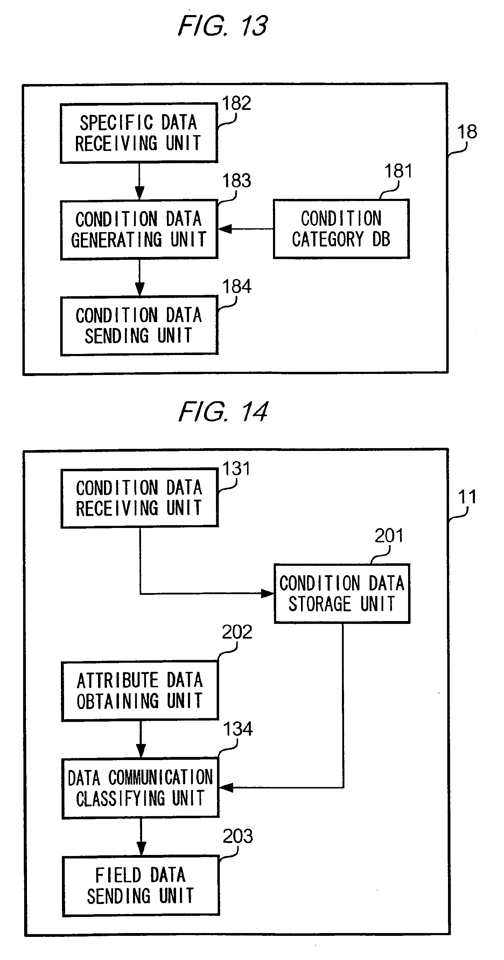

In the second embodiment, a classification process of data communication is performed by mobile terminal 11. Fig. 13, Fig. 14, and Fig. 15 are diagrams respectively illustrating a functional configuration of condition data providing server 18, mobile terminal 11, and accounting server 13 in the second modification of the present invention.

In communication system 1 of the second modification, the concerned person in company A operates fixed terminal 19 to send specific data to accounting server 13. When receiving specific data, specific data receiving unit 182 of condition data providing server 18 sends the received specific data to condition data generating unit 183. When receiving specific data, condition data generating unit 183 uses condition category data stored in condition category DB 181 to generate condition data for mobile terminal 11 identified by a telephone number included in specific data (hereinafter, referred to as "the telephone number"). Condition data generating unit 183 sends the generated condition data to condition data sending unit 184. Condition data sending unit 184 registers the received condition data as condition data of the telephone number.

When receiving condition data from condition data providing server 18, condition data receiving unit 131 of mobile terminal 11 stores the received condition data in condition data storage unit 201. In the case that an employee of company A performs data communication using mobile terminal 11, attribute data obtaining unit 202 of mobile terminal 11 obtains attribute data relating to data communication performed by mobile terminal 11; attribute data includes the duplication of data packet or call starting data and call completion data. Attribute data obtaining means 202 sends the obtained attribute data to data communication classifying unit 134. When receiving attribute data, data communication classifying unit 134 classifies data communication corresponding to the received attribute data into a suitable field, on the basis of condition data stored in condition data storage unit 201. When completing the classification of data communication, data communication classifying unit 134 sends field data sending unit 203 field data indicating the field to where data communication be classified. Field data sending unit 203 sends the received field data to accounting server 13.

When receiving field data from mobile terminal 11, field data receiving unit 204 of accounting server 13 sends the received field data to telecommunication fees calculating means 135. When receiving field data, telecommunication fees calculating unit 135 calculates telecommunication fees in accordance with the number of packets sent and received in data communication and the communication duration of data communication. The telecommunication fees calculating unit sends fee DB 136 communication-based fee data indicating the calculated telecommunication fees, along with the received field data, to fee DB 136. Note that the information such as the number of packet and communication time used by telecommunication fees calculating means 135 to calculate telecommunication fees may either be included in field data by data communication classifying unit 134 of mobile terminal 11, or may be obtained independently by accounting server 13 from switching relay center in communication network 12.

When receiving communication-based fee data and field from data telecommunication fees calculating means 135, fee DB 136 adds the communication fees indicated by communication-based fee data to the value of fees corresponding to the field indicated by the field data, among business purpose fee data communication prohibited fees, and private purpose fees included in the fee data of the telephone number.

When the billing date comes, payment request data sending unit 137 calculates telecommunication fees to be billed for company A and each employee on the basis of fee data of respective telephone number in fee DB 136. Then, the payment request data sending unit sends payment server 17 payment request data requesting the withdrawal of calculated telecommunication fees.

### [2. 3. Third Modification]

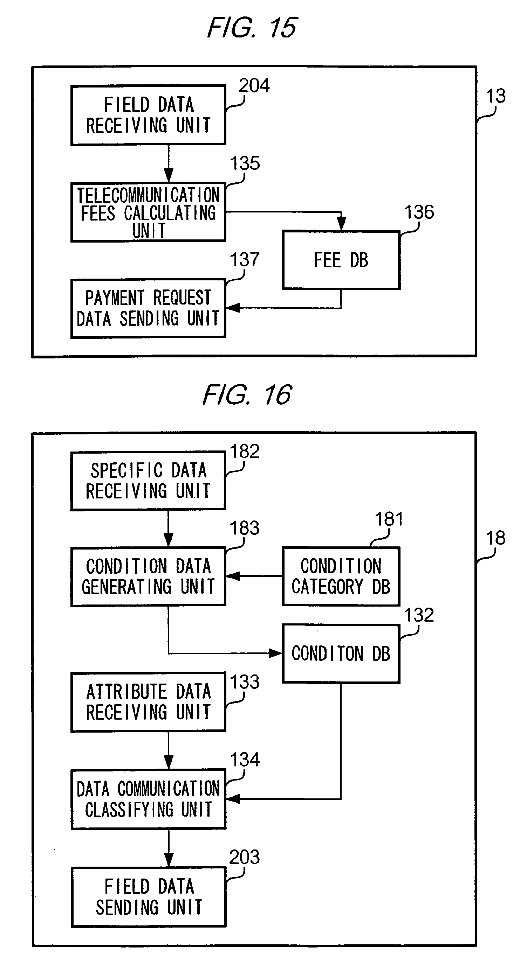

In the third modification, a classification process is performed by condition data providing server 18. Fig. 16 is a diagram illustrating the functional configuration of condition data providing server 18 in the third modification. The functional configuration of accounting server 13 in the third embodiment is the same as second embodiment shown in Fig. 15.

In communication system 1 of the third modification, the concerned person in company A operates fixed terminal 19 to send specific data to accounting server 13. When receiving specific data, specific data receiving unit 182 of condition data providing server 18 sends the received specific data to condition data generating unit 183. When receiving specific data, condition data generating unit 183 uses condition category data stored in condition category DB 181 to generate condition data for mobile terminal 11 identified by a telephone number included in specific data (hereinafter, referred to as "the telephone number"). Condition data generating unit 183 sends the generated condition data to condition DB 132. Condition DB 132 registers the received condition data as condition data of the telephone number.

In the case that an employee of company A performs data communication using mobile terminal 11, attribute data receiving unit 133 of mobile terminal 11 obtains attribute data relating to data communication performed by mobile terminal 11; attribute data includes the duplication of data packet or call starting data and call completion data. Instead of directly receiving attribute data from relay switching center, attribute data receiving unit 133 of condition data providing server 18 may receive attribute data via accounting server 13, for example. Attribute data receiving unit 133 sends the received attribute data to data communication classifying unit 134. When receiving attribute data, data communication classifying unit 134 classifies data communication corresponding to the received attribute data into a suitable field, on the basis of condition data stored in condition DB 132. When completing the classification of data communication, data communication classifying unit 134 sends field data sending unit 203 field data indicating the field to where data communication be classified. Field data sending unit 203 sends the received field data to accounting server 13.

When receiving field data from condition data providing server 18, accounting server 13 performs the same process as in the case of second modification. The accounting server calculates telecommunication fees classified into a field for each telephone number of mobile terminal 11; and when the billing date of telecommunication fees comes, and sends to payment server 17 payment request data requesting the withdrawal of the calculated telecommunication fees.

### [2. 4. Fourth Modification]

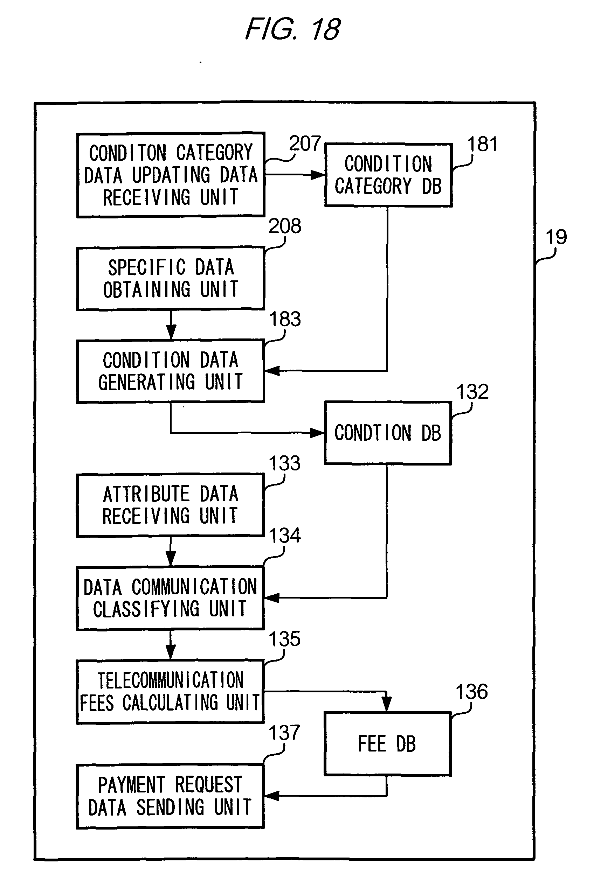

In the fourth modification, a classification process of data communication is performed by mobile terminal 19 used by an administrator in company A. Company A purchases from company X, for example, an application for realizing the function of fixed terminal 19 and pre-installs the application in fixed terminal 19. Condition category DB 181 is included in the application; the condition category data included in condition category DB 181 involves the daily updating, as described. Therefore, if necessary, company X sends from condition data providing server 18 to fixed terminal 19 condition category data updating data for updating the contents of condition category DB 181 stored in fixed terminal 19. Fig. 17 and Fig. 18 are diagrams illustrating a functional configuration of condition data providing server 18 and fixed terminal 19, respectively in the fourth modification of the present invention.

When the mobile telephone administrator updates the contents of condition category DB 181 in condition data providing server 18, condition category data updating data generating unit 205 generates condition category data updating data. Condition category data updating data generating unit 205 sends the generated condition category data updating data to condition category data updating data sending unit 206. Condition category data updating data sending unit 206 sends the received condition category data updating data to fixed terminal 19.

When receiving condition category data updating data from condition data providing server 18, condition category data updating data receiving unit 207 of fixed terminal 19 sends the received condition category data updating data to condition category DB 181 of fixed terminal 19. When receiving condition category data updating data, condition category DB 181 of fixed terminal 19 updates stored condition category data in accordance with the received condition category data updating data.

The mobile telephone administrator in company A operates fixed terminal 19 to input specific data in fixed terminal 19. Specific data obtaining unit 208 receives specific data input from the mobile telephone administrator in company A and sends the obtained specific data to condition data generating unit 183. Then, by performing the same process as performed by accounting server 13 in the first embodiment, fixed terminal 19 classifies data communication performed by mobile terminal 11 into a suitable field, calculates the telecommunication fees of each field, and sends payment request data generated on the basis of the calculated telecommunication fees to payment server 17.

In the fourth embodiment, the payment request of telecommunication fees is performed by company A who has to be charged; the billing is not performed by company Y, the creditor. Thus, it may be unusual for fixed terminal 19 to instruct money transfer from the bank account of each employee to the bank account of company Y. In such a case, payment request data sending unit 137 may for example transfer the total amount of telecommunication fees on data communication performed by mobile terminal 11 from the bank account of company A to the bank account of company Y; the communication entity also generates payment request data instructing the transfer of telecommunication fees to be charged for each employee from the bank account of the employee to the bank account of company A.

## Claims

1. An accounting method comprising:
a communication process, wherein one communication device included in a communication network performs data communication with other communication devices included in said communication network;
a classifying process for classifying, on the basis of condition data indicating the correspondence relationship between attributes of data communication and fields of data communication, said data communication performed in said communication process into any one of a data communication field; and
a calculating process for calculating, for each data communication field classified in said classifying process, the communication fees for said data communication.

2. A communication device comprising:
communication means for performing data communication with other communication devices over a communication network;
storage means for storing condition data indicating the correspondence relationship between attributes of data communication and fields of data communication;
acquiring means for acquiring attribute data indicating the data communication attributes performed among plural communication devices in said communication network;
classifying means for classifying, on the basis of said attribute data and said condition data, said data communication performed in said communication process into any one of a data communication field.

3. Communication device of Claim 2; wherein, said communication means sends field data indicating the data communication field classified by said classifying means.

4. Communication device of Claim 2, further comprising calculating means for calculating, on the basis of field data indicating the data communication field classified by said classifying means, communication fees for each field in data communication performed between communication devices.

5. Communication device of Claim 4, wherein, said communication means sends to other communication devices fee data indicating said telecommunication fees.

6. Communication device of Claim 2; wherein,
said communication receives condition data from other communication devices; and
said storage means stores condition data received by said communication means.

7. Communication device of Claim 2; wherein,
said communication means receives from other communication devices, specific data indicating the correspondence relationship between data communication attributes and data communication field, both of which to be included in the condition data; said communication means further comprising generating means for generating condition data on the basis of said specific data;
said storage means stores condition data generated by said generating means.

8. Communication device of Claim 7; wherein,
said communication means sends said condition data to other communication devices.

9. Communication device of Claim 2; wherein,
said storage means stores condition data in correspondence with each identifier for identifying a communication device in said communication network;
said acquiring means acquires attribute data including any one of an identifier of said plural communication devices; and
said classifying means classifies data communication performed among said plural communication devices into any one of a data communication field, on the basis of condition data stored in correspondence with an identifier included in said attribute data by said storage means.
